# EUROPÄISCHE PATENTANMELDUNG

(11) **EP 1 752 357 A2**
(43) Veröffentlichungstag der Anmeldung: **14.02.2007**
(21) Anmeldenummer: 06015944.9
(22) Anmeldetag: 01.08.2006
(51) Int. Cl.: B62B 3/18

(54) **Transportwagen**

(30) Priorität: 09.08.2005 DE 202005012680 U
(71) Anmelder: Wanzl Metallwarenfabrik GmbH, 89336 Leipheim (DE)
(72) Erfinder: Blaha, Martin, 89335 Ichenhausen/Hochwang (DE); Müller, Ralf, 86657 Bissingen (DE)

(57) **Zusammenfassung**

Die Erfindung betrifft einen Transportwagen, insbesondere Einkaufwagen (1), mit einem Fahrgestell (2), mit Lenkrollen (3), mit wenigstens einer Aufnahme für herausnehmbare Körbe (4) und mit vorzugsweise einer Aufnahme für Tüten (5).

Die Erfindung zeichnet sich dadurch aus, dass eine weitere Aufnahme (6) für wenigstens eine Kiste (8) vorgesehen ist und wobei die weitere Aufnahme (6) unterhalb der wenigstens einen Aufnahme für Körbe (4) vorgesehen ist.

## Beschreibung

Die Erfindung bezieht sich auf einen Transportwagen wie er vorzugsweise in SB-Geschäften Einsatz findet, mit den Merkmalen im Oberbegriff des Hauptanspruchs.

Zum Stand der Technik zählt beispielsweise ein Transportwagen wie ihn die japanische Patentanmeldung JP 2001122125 A beschreibt. Dieser Wagen weist Aufnahmen für jeweils einen Korb auf. Die Aufnahmen sind übereinander bzw. auf verschiedenen Höhen ortsfest angeordnet. Eine der Aufnahmen ist an der Rückseite des Wagens vorgesehen.

Aufnahmen dieser Art können Körbe, meist Kunststoffkörbe, aufnehmen, in die Waren während des Einkaufens hineingelegt werden. Die Körbe können dann mit den Waren herausgenommen werden und direkt in einen PKW geladen werden, oder die Waren können in eine Tasche gepackt werden. Die Herausnahme der Körbe kann sich jedoch als schwierig erweisen. Besonders große und gleichzeitig schwere Waren können mit so einem Wagen kaum oder nur sehr schwierig transportiert werden.

Die Aufgabe der Erfindung besteht darin, einen besseren Transportwagen aufzuzeigen.

Die Erfindung löst die Aufgabe mit den Merkmalen im Hauptanspruch.

Als Vorteile der vorgeschlagenen Lösung sind zu nennen, dass eine Kiste mit Glasflaschen oder eine Packung mit Kunststoffflaschen auf einer extra dafür vorgesehenen Aufnahme abgestellt werden kann, die derart angeordnet ist, dass sie während des Schiebens nicht störend wirkt.

Die Stapelbarkeit eines Wagens in einen gattungsgleichen weiteren Wagen ist gegeben, wenn der Wagen nicht beladen ist.

Weiterhin ist durch die schräge Anordnung der Aufnahme ein bequemes Hineinstellen und Herausnehmen der Kiste bzw. der Packung mit Kunststoffflaschen gegeben.

Die Erfindung wird anhand von Ausführungsbeispielen näher erläutert. Es zeigt
- Fig. 1: einen Transportwagen, insbesondere einen Einkaufswagen in 3-D-Darstellung mit Aufnahmen für zwei Körbe und einer Aufnahme für eine Kiste sowie
- Fig. 2: den gleichen Einkaufswagen in 3-D-Ansicht in beladenem Zustand mit einer Kiste.

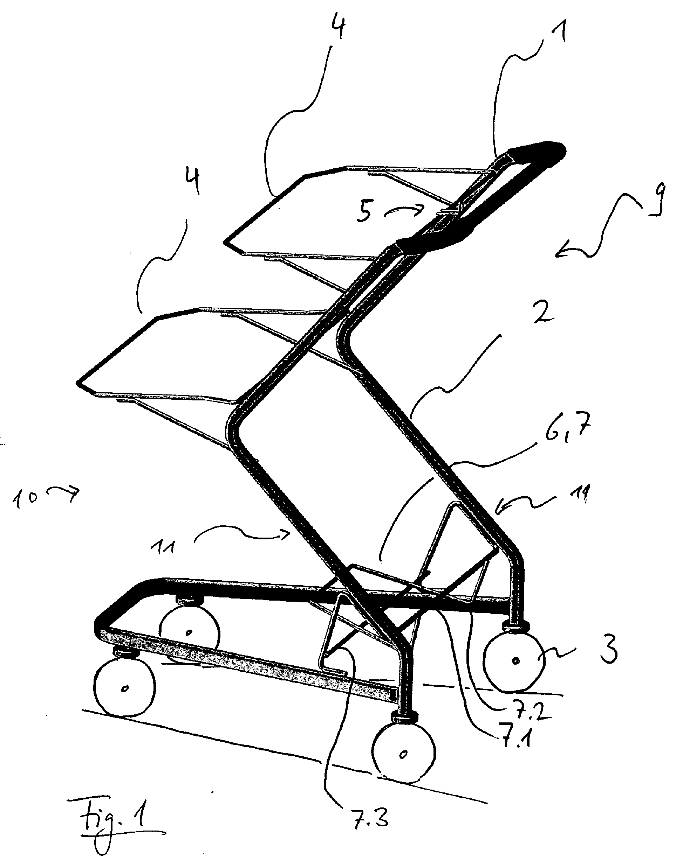

Fig. 1 zeigt einen Transportwagen 1, insbesondere einen Einkaufswagen, in 3-D-Darstellung, mit einem Fahrgestell 2, Lenkrollen 3 und zwei Aufnahmen 4 für nicht näher dargestellte Körbe. Der Transportwagen 1 ist in einen gattungsgleichen weiteren Transportwagen stapelbar.

Die Aufnahmen 4 sind ortsfest am Fahrgestell 2 angeordnet. Der Wagen 1 weist eine Rück- und eine Vorderseite 9, 10 auf. An der Rückseite 9 des Wagens 1 ist eine Aufnahme 5 für Tüten vorgesehen.

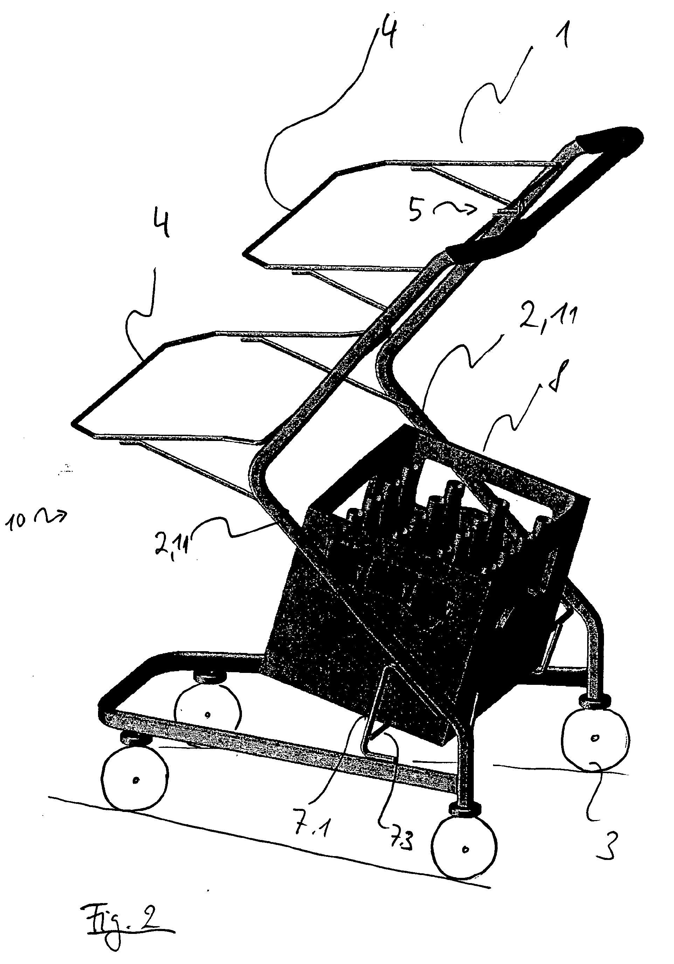

Im unteren Bereich ist eine Aufnahme 6 für eine Kiste 8 mit Glasflaschen oder eine Packung mit Kunststoffflaschen vorgesehen. In Figur 2 ist eine Kiste 8 in der Aufnahme 6 abgestellt. Die Aufnahme 6 ist ortsfest mit dem Fahrgestell 2 verbunden. Insbesondere ist die Aufnahme 6 aus einer Drahtkonstruktion 7 gebildet.

Diese Drahtkonstruktion 7 ist in vorteilhafterweise aus drei Teilen 7.1 bis 7.3 gebildet. Das erste Teil 7.1 dieser Drahtkonstruktion 7 ist an beiden Seitenteilen 11 des Fahrgestells 2 ortfest angeordnet und bildet eine Querverstrebung zwischen beiden Seitenteilen 11. Das zweite Teil 7.2 bildet die eigentliche Ablagefläche für die Kiste 8. Dieses ist an der Querverstrebung des ersten Teiles 7.1 ortsfest vorgesehen. Eine weitere Verstärkung erfolgt durch ein drittes Teil 7.3, welches aus einer weiteren Querverstrebung gebildet ist und vorzugsweise mit dem ersten und dem zweiten Teil 7.1 bzw. 7.2 ortsfest verbunden ist. Vorteilhafterweise ist das dritte Teil 7.3 unterhalb des zweiten Teiles 7.2 angeordnet. Dadurch wirkt das dritte Teil 7.3 nicht hindernd.

Das zweite Teil 7.2 ist in geneigter Position in Richtung der Rückseite 9 des Wagens 1 angeordnet. Dies ermöglicht sowohl ein einfaches Abstellen einer Kiste 8 oder einer Packung mit Kunststoffflaschen auf der Aufnahme 6 als auch ein bequemes Herausnehmen.

Das erste Teil 7.1 der Drahtkonstruktion 7, insbesondere die Querverstrebung, ist derart gebildet, dass es während des Schiebens des Wagens 1 nicht stört.

Die gesamte Drahtkonstruktion 7 gewährleistet die Stapelbarkeit des Wagens 1 in einen gattungsgleichen Wagen, solange die Aufnahme 6 keine Kisten 8 oder andere Waren aufweist.

Das Abstellen einer gefüllten Kisten 8 auf der Aufnahme 6 verleiht dem Wagen 1 zusätzlich Stabilität.

In einer weiterführenden Variante ist die Drahtkonstruktion 7 einteilig oder aus zwei oder einer größeren Anzahl von Teilen. Auch ist die Anordnung der Teile in anderen Formen denkbar. Weitere konstruktive Lösungen der Drahtkonstruktion 7 bleiben dem Fachmann überlassen.

## Patentansprüche

1. Transportwagen, insbesondere Einkaufwagen (1), mit einem Fahrgestell (2), mit Lenkrollen (3), mit wenigstens einer Aufnahme für herausnehmbare Körbe (4) und mit vorzugsweise einer Aufnahme für Tüten (5), **dadurch gekennzeichnet, dass** eine weitere Aufnahme (6) für wenigstens eine Kiste (8) vorgesehen ist und wobei die weitere Aufnahme (6) unterhalb der wenigstens einen Aufnahme für Körbe (4) vorgesehen ist.

2. Transportwagen nach Anspruch 1, **dadurch gekennzeichnet, dass** die Aufnahme (6) für wenigstens eine Kiste (8) ortsfest am Fahrgestell (2) angeordnet ist.

3. Transportwagen nach Anspruch 1 oder 2, **dadurch gekennzeichnet, dass** die Aufnahme (6) für wenigstens eine Kiste (8) durch eine Drahtkonstruktion (7) gefertigt ist.

4. Transportwagen nach einem der Ansprüche 1 bis 3, **dadurch gekennzeichnet, dass** die Drahtkonstruktion (7) derart angeordnet ist, dass die wenigstens eine Kiste (8) geneigt auf der Aufnahme (6) aufliegt.

5. Transportwagen nach einem der Ansprüche 1 bis 4, **dadurch gekennzeichnet, dass** die Drahtkonstruktion (7) vorzugsweise aus drei Teilen (7.1) bis (7.3) hergestellt ist.
